Europäisches Patentamt

European Patent Office

Office européen des brevets

(11) Publication number: **0 451 919 B1**

## EUROPEAN PATENT SPECIFICATION

(45) Date of publication of patent specification: **01.02.95**

(51) Int. Cl.⁶: **C08F 297/04**, C09J 153/02, C08L 53/02

(21) Application number: **91200825.7**

(22) Date of filing: **09.04.91**

(54) **Styrene-isoprene-styrene block copolymer composition for low viscosity low application temperature hot melt adhesives.**

(30) Priority: **11.04.90 US 510901**

(43) Date of publication of application:
**16.10.91 Bulletin 91/42**

(45) Publication of the grant of the patent:
**01.02.95 Bulletin 95/05**

(84) Designated Contracting States:
**BE DE DK ES FR GB IT NL SE**

(56) References cited:
**WO-A-91/02039**
**DE-A- 1 794 415**
**DE-A- 2 942 128**

(73) Proprietor: **SHELL INTERNATIONALE RE-SEARCH MAATSCHAPPIJ B.V.**
**Carel van Bylandtlaan 30**
**NL-2596 HR Den Haag (NL)**

(72) Inventor: **Chin, Steven Soohyun**
**15250 Gray Ridge Drive No. 622**
**Houston,**
**Texas 77082 (US)**

Rank Xerox (UK) Business Services
(3.10/3.09/3.3.3)

## Description

This invention relates to a novel block copolymer composition for use in low viscosity low application temperature hot melt adhesives. More particularly, it relates to predominantly linear styrene-isoprene-styrene block copolymer compositions comprised of linear polymeric blocks and adhesives made using such compositions.

It is known that a block copolymer can be obtained by an anionic copolymerization of a conjugated diene compound and an alkenyl arene compound by using an organic alkali metal initiator. Block copolymers have been produced which comprise primarily those having a general structure

A—B and A—B—A

wherein the polymer blocks A comprise thermoplastic polymer blocks of alkenyl arenes such as polystyrene, while block B is a polymer block of a conjugated diene such as polyisoprene. The proportion of the thermoplastic blocks to the elastomeric polymer block and the relative molecular weights of each of these blocks is balanced to obtain a rubber having unique performance characteristics. When the content of the alkenyl arene is small, the produced block copolymer is a so-called thermoplastic rubber. In such a rubber, the blocks A are thermodynamically incompatible with the blocks B resulting in a rubber consisting of two phases - a continuous elastomeric phase (blocks B) and a basically discontinuous hard, glass-like plastic phase (blocks A) called domains. Since the A-B-A block copolymers have two A blocks separated by a B block, domain formation results in effectively locking the B blocks and their inherent entanglements in place by the A blocks and forming a network structure.

These domains act as physical crosslinks anchoring the ends of many block copolymer chains. Such a phenomenon allows the A-B-A rubber to behave like a conventionally vulcanised rubber in the unvulcanized state and is applicable for various uses. For example, these network forming polymers are applicable for uses such in adhesive formulations; as mouldings of shoe soles, etc.; impact modifier for polystyrene resins and engineering thermoplastics; modification of asphalt; etc.

Styrenic block copolymers are widely used to make hot melt adhesives for a wide variety of uses including diaper assembly. Hot melt adhesives based on styrenic block copolymers such as KRATON thermoplastic rubber (KRATON is a trade mark) provide excellent adhesion to non-polar substrates such as polyethylene which are commonly used in diaper manufacture. Additionally, such styrenic block copolymer based adhesives maintain adhesion in elastically demanding applications such as disposable diapers. Relatively low styrene content (from 15% to 24%) styrene-isoprene-styrene block copolymers are known to be useful for adhesives for such applications.

New improvements have necessitated the development of new hot melt adhesives for use in the manufacture of disposable diapers. Diaper manufacturers now use thinner gauge polyethylene to manufacture diapers. Not only does thinner gauge polyethylene produce a more esthetically pleasing diaper but it also represents significant cost savings. However, as the gauge of the polyethylene is decreased, the likelihood of burn through of these thin layers has increased. In the past, the lower limit on the operating temperature has been defined by the temperature at which the hot melt adhesive could be applied with sufficiently low viscosity for even and proper application. Such temperatures were in the range of 149 °C to 177 °C. The industry would like to operate at from 121 °C to 149 °C.

Thus, it is clear that there is a need for a hot melt adhesive which is characterized by sufficiently low viscosity for proper application in diaper manufacture at these lower temperatures to help prevent burn through of the thinner gauge polyethylene used in the new diaper assemblies. There are new commercial products which purport to satisfy this need. However, these commercial products do not provide the balance of adhesive performance properties which is provided by the present invention, i.e., a melt viscosity of less than 3100 cps at a temperature of 177 °C and a shear adhesion failure temperature (SAFT) of greater than 71 °C. The present invention provides block copolymer compositions which can be used to make adhesives satisfying these criteria.

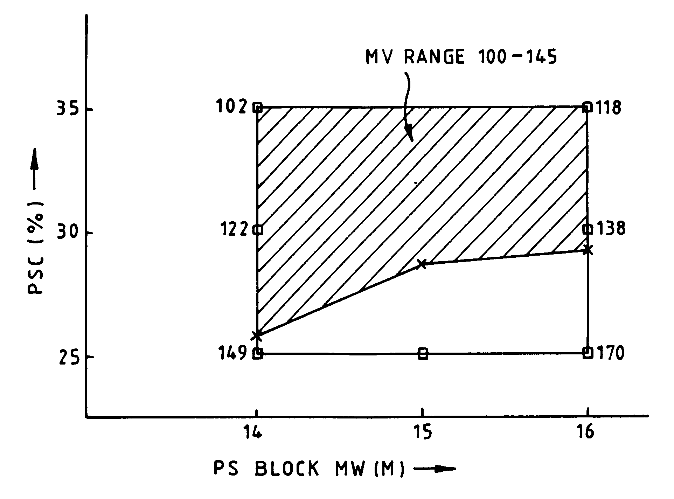

The present invention relates to predominantly linear styrene-isoprene-styrene (SIS) block copolymer compositions comprised of linear polymeric blocks. These compositions can be used in low viscosity, low application temperature hot melt adhesives. The compositions are characterized in that the polystyrene block molecular weight ranges from 14,000 to 16,000. The polystyrene content ranges from 25% to 35% by weight of the block copolymer composition and the molecular weight of the block copolymer composition ranges from 80,000 to 145,000 and preferably from 100,000 to 145,000. The compositions according to the present invention have been found to fall within the shaded area in figure 1, representing a graph of the polystyrene content versus the polystyrene block molecular weight, on which is shown in addition the block copolymer composition molecular weight.

The present invention also encompasses a low viscosity, low application temperature hot melt adhesive comprising the above block copolymer composition and a tackifying resin.

The predominantly linear styrene-isoprene-styrene (SIS) block copolymers, comprising linear blocks, can be prepared by methods which are in principle known in the art.

As is well known, polymers containing both aromatic and ethylenic unsaturation can be prepared by copolymerizing one or more polyolefins, particularly a diolefin, such as isoprene, with one or more alkenyl aromatic hydrocarbon monomers, such as styrene. The copolymers may, of course, be random, tapered, block or a combination of these. However, in this specific case block copolymers are desired, wherein the blocks are linear.

Polymers containing ethylenic unsaturation or both aromatic and ethylenic unsaturation may be prepared using free-radical, cationic and anionic initiators or polymerization catalysts. Such polymers may be prepared using bulk, solution or emulsion techniques. In any case, the polymer containing at least ethylenic unsaturation will, generally, be recovered as a solid such as a crumb, a powder, a pellet or the like. Polymers containing ethylenic unsaturation and polymers containing both aromatic and ethylenic unsaturation are, of course, available commercially from several suppliers.

Polymers of conjugated diolefins and copolymers of one or more conjugated diolefins and one or more alkenyl aromatic hydrocarbon monomers such as predominantly linear SIS block copolymers are normally prepared in solution using anionic polymerization techniques. In general, when solution anionic techniques are used, these SIS block copolymers are prepared by contacting the momoners to be polymerized simultaneously or sequentially with an organoalkali metal compound in a suitable solvent at a temperature within the range from -150 °C to 300 °C, preferably at a temperature within the range from 0 °C to 100 °C. Particularly effective anionic polymerization initiators are organolithium compounds having the general formula:

$$RLi_n$$

wherein:

R is an aliphatic, cycloaliphatic, aromatic or alkyl-substituted aromatic hydrocarbon radical having from 1 to 20 carbon atoms; and n is an integer of 1 to 4.

Preferably sec.-butyllithium is used.

In general, any of the solvents known in the prior art to be useful in the preparation of such polymers may be used. Suitable solvents, then, include for example cycloaliphatic hydrocarbons such as cyclopentane, cyclohexane, cycloheptane and the like, as well as, alkyl-substituted derivatives thereof; aromatic and alkyl-substituted aromatic hydrocarbons such as benzene, naphthalene, toluene, xylene and the like; hydrogenated aromatic hydrocarbons such as tetralin, decalin and the like; linear and cyclic ethers such as methyl ether, methyl ethyl ether, tetrahydrofuran and the like.

As described in U.S. Patent No. 4,096,203 usually the styrene is contacted with the initiator. Next, the living polymer in solution is contacted with isoprene. The resulting living polymer has a simplified structure S-I-Li. It is at this point that the living polymer is coupled.

There are a wide variety of coupling agents that can be employed. Any polyfunctional coupling agent which contains at least two reactive sites can be employed. Examples of the types of compounds which can be used include those which have been described in U.S. Patent Nos. 3,595,941; 3,468,972; 3,135,716; 3,078,254; and 3,594,452. When the coupling agent has two reactive sites such as dibromoethane, the polymer will have a linear SIS structure, and since the present block copolymers are linear, such a coupling agent with two reactive sites must be used.

In the prior art, such as that exemplified by U.S. Patent Nos. 3,595,941 and 3,468,972, the effort was always made to select the particular coupling agent or reaction conditions that resulted in the highest coupling efficiency. High coupling efficiency is desired herein in order to produce strong adhesive compositions. Coupling efficiency is defined as the number of molecules of coupled polymer divided by the number of molecules of coupled polymer plus the number of molecules of uncoupled polymer.

Thus, when producing an SIS linear polymer, according to the present invention, the coupling efficiency is shown by the following relationship:

$$\frac{\text{\# of Molecules of SIS}}{\text{\# of molecules of SIS plus SI}}$$

Coupling efficiency can be determined theoretically from the stoichiometric quantity of coupling agent required for complete coupling or coupling efficiency can be determined by an analytical method such as gel permeation chromatography, as was known from e.g. U.S. Patent No. 4,096,203, teaching that the coupling efficiency is controlled from 20% to 80%, preferably 30% to 70%.

It is also within the scope of the present invention to prepare the desired copolymers having the desired adhesive properties by blending polymers from processes of differing coupling efficiency. It was found that if the coupling efficiency of the block copolymers is too low, i.e., less than 60%, the SAFT may fall below 71 °C.

This coupling efficiency is controlled by a number of methods as disclosed in U.S. Patent No. 4,096,203, columns 3 and 4.

It will be appreciated that the predominantly linear SIS block copolymer composition of the present invention can also be prepared by initial polymerization of styrene using an organo-lithium initiator up to a predetermined molecular weight of the polystyrene block, adding isoprene in an amount to obtain a predetermined molecular weight of the polyisoprene block and after finishing the polymerization adding styrene in a predetermined amount.

Following the coupling reaction or when the desired coupling efficiency has been obtained, or alternatively without coupling, when the polymerization has been finished, the product is neutralized such as by the addition of terminators, e.g. water, alcohol or other reagents, for the purpose of removing the lithium radical forming the nucleus for the condensed polymer product. The product is then recovered such as by coagulation utilizing hot water or steam or both.

As discussed above, for certain new applications in the diaper industry, it has been determined that an adhesive formulation must have a melt viscosity of less than 3100 cps at 177 °C and a shear adhesion failure temperature (SAFT) of greater than 71 °C. The present invention provides a composition and an adhesive which satisfies these requirements. The composition is a predominantly linear SIS block copolymer composition which is comprised of linear polymeric blocks and has a relatively high coupling efficiency. In order to achieve the standards set forth above, the compositions and adhesives of the present invention must have the following characteristics:

(1) a polystyrene block molecular weight of 14,000 to 16,000;

(2) a polystyrene content of 25% to 35%; and

(3) an overall molecular weight ($M_s$ - styrene equivalent molecular weight) of 100,000 to 145,000.

It has been determined that if the above compositions do not have the above characteristics, then the melt viscosity and SAFT criterion cannot be met. However, if the composition does have the above characteristics, then the melt viscosity and SAFT criterion are satisfied. Figure 1 is a plot of polystyrene content versus polystyrene block molecular weight which is made using the data from the examples. Those two characteristics define a rectangle from 25 to 35% and from 14,000 to 16,000. When the overall molecular weight range is factored in, the effective area in which the present invention can be practiced is limited to the shaded area. If an SIS block copolymer composition falls within the shaded area, the above melt viscosity and SAFT criterion will be satisfied.

The concentration of the initiator can be regulated to control the molecular weight of the overall composition and of the polystyrene blocks. Generally, the initiator concentration is in the range of 0.25 to 50 millimoles per 100 grams of monomer. The required initiator level frequently depends upon the solubility of the initiator in the hydrocarbon diluent. The ratio of the initiator to the monomer determines the block size, i.e. the higher the ratio of initiator to monomer the smaller the molecular weight of the block.

Methods of controlling the molecular weights of the blocks and the overall polymer are quite well known. For instance, such are disclosed in U.S. Patents 3,149,182, which states that the amount of monomer can be kept constant and different molecular weights can be achieved by changing the amount of initiator or the amount of initiator can be kept constant and different molecular weights can be achieved by varying the amount of the monomer, and in U.S. 3,231,635, and many others.

A typical block copolymer composition within the scope of the present invention, having a polystyrene block molecular weight of 15,000, a polystyrene content of 30% and an overall molecular weight of 137,000, was prepared by polymerizing styrene with sec.-butyllithium as initiator at a monomer to initiator molar ratio of 144 to 1 and then completing the polymerization, polymerizing isoprene at a monomer to initiator molar ratio of 154 to 1 and then completing the polymerization and finally polymerizing polystyrene again under the same conditions as before, or by polymerizing styrene with sec.-butyllithium as initiator until the predetermined polystyrene block had been obtained, followed by polymerizing isoprene and after completion of this polymerization step coupling the obtained living polymer by means of dibromoethane.

It is necessary to add an adhesion promoting or tackifying resin that is compatible with the elastomeric conjugated diene block. A common tackifying resin is a diene-olefin copolymer of piperylene and 2-methyl-2-butene having a softening point of 95 °C. This resin is available commercially under the tradename Wingtack 95 and is prepared by the cationic polymerization of 60% piperylene, 10% isoprene, 5% cyclopentadiene, 15% 2-methyl-2-butene and 10% dimer, as taught in U.S. Patent No. 3,577,398. Other tackifying resins of the same general type may be employed in which the resinous copolymer comprises 20-80 weight percent of piperylene and 80-20 weight percent of 2-methyl-2-butene. The resins normally have softening points (ring and ball) between 80 °C and 115 °C.

Other adhesion promoting resins which are also useful in the compositions of this invention include hydrogenated rosins, esters of rosins, polyterpenes, terpenephenol resins and polymerized mixed olefins. To obtain good thermo-oxidative and colour stability, it is preferred that the tackifying resin be a saturated resin, e.g., a hydrogenated dicyclopentadiene resin such as Escorez 5000 series resin (Escorez is a trade mark) made by Exxon or a hydrogenated polystyrene or polyalphamethylstyrene resin such as Regalrez resin (Regalrez is a trade mark) made by Hercules.

The amount of adhesion promoting resin employed varies from 20 to 400 parts by weight per hundred parts rubber (phr), preferably between 100 to 350 phr.

The selection of the particular tackifying agent is, in large part, dependent upon the specific block copolymer employed in the respective adhesive composition. In the manufacture of disposable articles such as diapers, sanitary napkins and bed pads, there is the additional consideration of having a substantially white or clear adhesive composition.

The adhesive composition of the instant invention may contain plasticizers, such as rubber extending plasticizers, or compounding oils or liquid resins. Rubber compounding oils are well-known in the art and include both high saturates content oils and high aromatics content oils. Preferred plasticizers are highly saturated oils, e.g. Tufflo 6056 oil (Tufflo is a trade mark) made by Arco. The amounts of rubber compounding oil employed in the invention composition can vary from 0 to 100 phr, and preferably between 0 to 60 phr.

Optional components of the present invention are stabilizers which inhibit or retard heat degradation, oxidation, skin formation and colour formation. Stabilizers are typically added to the commercially available compounds in order to protect the polymers against heat degradation and oxidation during the preparation, use and high temperature storage of the adhesive composition.

Additional stabilizers known in the art may also be incorporated into the adhesive composition. These may be for protection during the life of the disposable article against, for example, oxygen, ozone and ultraviolet radiation. However, these additional stabilizers should be compatible with the essential stabilizers mentioned herein-above and their intended function as taught herein.

The adhesive compositions of the present invention are typically prepared by blending the components at an elevated temperature, preferably between 130 °C and 200 °C, until a homogeneous blend is obtained, usually less than three (3) hours. Various methods of blending are known to the art and any method that produces a homogeneous blend is satisfactory.

The resultant adhesives may then preferably be used in a wide variety of product assembly applications. A particularly preferred application is their use in bonding polyethylene or polypropylene substrates to tissue, non-wovens or other polyethylene or polypropylene substrates using techniques involving multiple dispositions of small quantities of the adhesives according to conventional "multi-line" or "multi-dot" type constructions. Although the procedures used to manufacture these disposable constructions vary depending upon the particular manufacturer, the adhesive is generally extruded in lines (or dots) at regularly spaced intervals along the length of the article. The adhesive may be applied at temperatures as low as 121 °C. An additional advantage of the adhesive of the present invention is that it can be effectively applied by spraying. The adhesive is usually applied to the polyethylene or polypropylene backing and subsequently the combination is mated with an absorbent inner core and tissue or non-woven liner.

In the following examples, the coupling efficiency was determined by the method described above. The melt viscosity was measured in centipoise-seconds (cps) by using a Brookfield Thermocell viscometer at 177 °C. The SAFT was measured by 1" x 1" Mylar to Mylar lap joint with a 1 kg weight. SAFT measures the temperature at which the lap shear assembly fails under load. The molecular weights were determined by gel permeation chromatography as styrene equivalent molecular weight. The polystyrene content was determined by nuclear magnetic spectroscopy.

A series of predominantly linear SIS block copolymers comprised of linear polymeric blocks were made and analyzed (samples 1-17). For comparative purposes, three commercially available products which are currently used in low application temperature low viscosity applications were also analyzed. These are also thought to be SIS block copolymers comprised of linear polymeric blocks but it can be seen that they do not meet the specifications of the present invention which are preferred.

5

The block copolymer compositions were made according to the procedures discussed above. The coupling agent was dibromoethane. They were used to make adhesives by blending 25% polymer with 60% tackifying resin (Escorez 5300) and 15% plasticiser (Tufflo 6056). The formulations were stabilized with 1 phr of Irganox 1010 (Irganox is a trade mark).

Table 1

| Sample | PS Block MW | PSC(%) | SI MW | Coup. Eff./(%) | MV(cps) | SAFT(%) |
|---|---|---|---|---|---|---|
| 1 | 11,400 | 24.9 | 122,000 | 86.2 | 1350 | 65 |
| 2 | 10,900 | 26.0 | 111,000 | 86.2 | 1380 | 62 |
| 3 | 13,300 | 21.0 | 169,000 | 82.0 | 3610 | 69 |
| 4 | 12,500 | 27.7 | 118,000 | 86.7 | 1560 | 70 |
| 5 | 12,500 | 25.9 | 127,000 | 86.3 | 1860 | 68 |
| 6. | 14,400 | 33.2 | 111,000 | 85.1 | 1460 | 73 |
| 7. | 15,300 | 32.8 | 119,000 | 86.3 | 1950 | 73 |
| 8. | 15,300 | 29.0 | 137,000 | 83.8 | 2160(2420) | 73(75) |
| 9. | 14,400 | 29.4 | 127,000 | 86.4 | 2140 | 73 |
| 10 | 15,300 | 26.8 | 149,000 | 87.5 | 3120 | 74 |
| 11 | 14,800 | 25.3 | 154,000 | 86.4 | 3240 | 74 |
| 12 | 14,700 | 29.6 | 134,000 | 86.1 | 2330 | 74 |
| 13 | 14,900 | 28.0 | 138,000 | 88.2 | 3030 | 74 |
| 14. | 14,900 | 31.0 | 124,000 | 88.5 | 2470 | 73 (cal.) |
| 15. | 12,200 | 23.8 | 138,000 | 85.2 | 2470 | 68 |
| 16. | 12,200 | 18.0 | 185,000 | 84.5 | 4560 | 66 |
| 17. | 13,700 | 20.8 | 177,000 | 83.7 | 3900 | 70 |
| A | 14,500 | 24.9 | 172,000 | 76.9 | 4650 | 71(72) |
| B | 13,900 | 25.0 | 165,000 | 76.3 | 3465 | 72(72,72) |
| C | 13,100 | 23.9 | 153,000 | 75.5 | 3199(3080) | 66(67,66) |

6

The data displayed above proved the criticality of the claimed ranges. For example, samples 1 through 5 all have a polystyrene block molecular weight lower than 14,000 and in one or two of them the other parameters are not met as well. None of these materials meets the criterion since all of them have an SAFT of less than 71 °C. Samples 6 through 9 and 12 through 14 all meet each of the claimed ranges and the criterion since melt viscosity is less than 3,000 and the SAFT is more than 71 °C. Samples 10, 11, 16 and 17 all have overall molecular weights of greater than 145,000 (1 or 2 do not meet other characteristics as well) and none of these samples satisfies the criterion. Sample 15 has a polystyrene block molecular weight and also a polystyrene content which are too low. It does not satisfy the criterion either.

The three commercial products all have overall molecular weights which are outside the claimed range. In some instances, other characteristics are not met. None of these products satisfies the criterion since A and B have melt viscosities greater than 3100 cps and the SAFT of C is too low.

**Claims**

**Claims for the following Contracting States : BE, DE, DK, FR, GB, IT, NL, SE**

1. A predominantly linear styrene-isoprene-styrene block copolymer composition comprised of linear polymeric blocks for use in low viscosity low application temperature hot melt adhesives, said block copolymer composition characterized in that
   (a) the polystyrene block molecular weight ranges from 14,000 to 16,000;
   (b) the polystyrene content ranges from 25% to 35% by weight of the block copolymer composition; and
   (c) the molecular weight of the block copolymer composition ranges from 100,000 to 145,000.

2. A hot melt adhesive comprising the block copolymer composition of claim 1 and a tackifying resin.

**Claims for the following Contracting State : ES**

1. Process for the preparation of a predominantly linear styrene-isoprene-styrene block copolymer composition comprised of linear polymeric blocks for use in low viscosity low application temperature hot melt adhesives, said block copolymer composition characterized in that
   (a) the polystyrene block molecular weight ranges from 14,000 to 16,000;
   (b) the polystyrene content ranges from 25% to 35% by weight of the block copolymer composition; and
   (c) the molecular weight of the block copolymer composition ranges from 100,000 to 145,000.

2. Process for the preparation of a hot melt adhesive comprising the block copolymer composition, obtainable by the process of claim 1, and a tackifying resin.

**Patentansprüche**

**Patentansprüche für folgende Vertragsstaaten : BE, DE, DK, FR, GB, IT, NL, SE**

1. Eine vorwiegend lineare Styrol-Isopren-Styrolblockcopolymerzusammensetzung, die aus linearen Polymerblöcken besteht, zur Verwendung in niedrigviskosen, Niedertemperatur-Heißschmelz-Klebemitteln, wobei diese Blockcopolymerzusammensetzung dadurch gekennzeichnet ist, daß
   (a) das Polystyrolblockmolekulargewicht sich von 14000 bis 16000 erstreckt;
   (b) der Polystyrolgehalt sich von 25 - 35 Gewichtsprozent, bezogen auf das Gewicht der Blockcopolymerzusammensetzung erstreckt, und
   (c) das Molekulargewicht der Blockcopolymerzusammensetzung sich von 100000 bis 145000 erstreckt.

2. Ein Heißschmelzklebemittel, umfassend die Blockcopolymerzusammensetzung des Anspruchs 1 und ein klebrigmachendes Harz.

**Patentansprüche für folgenden Vertragsstaat : ES**

1. Verfahren zur Herstellung einer vorwiegend linearen Styrol-Isopren-Styrolblockcopolymerzusammensetzung, die aus linearen Polymerblöcken besteht, zur Verwendung in niedrigviskosen, Niedertemperatur-Heißschmelz-Klebemitteln, wobei diese Blockcopolymerzusammensetzung dadurch gekennzeichnet ist, daß

    (a) das Polystyrolblockmolekulargewicht sich von 14000 bis 16000 erstreckt;

    (b) der Polystyrolgehalt sich von 25 - 35 Gewichtsprozent, bezogen auf das Gewicht der Blockcopolymerzusammensetzung erstreckt, und

    (c) das Molekulargewicht der Blockcopolymerzusammensetzung sich von 100000 bis 145000 erstreckt.

**2.**    Verfahren zur Herstellung eines Heißschmelzklebemittels, umfassend die Blockcopolymerzusammensetzung, die durch das Verfahren des Anspruchs 1 erhältlich ist, und ein klebrigmachendes Harz.

**Revendications**

**Revendications pour les Etats contractants suivants : BE, DE, DK, FR, GB, IT, NL, SE**

**1.**    Composition de copolymère séquencé styrène-isoprène-styrène linéaire de façon prédominante constituée de séquences polymères linéaires destinée à une utilisation dans des adhésifs thermofusibles à température d'application et à viscosité faibles, ladite composition de copolymère séquencé étant caractérisée en ce que

    (a) la masse moléculaire de la séquence polystyrène est comprise entre 14 000 et 16 000;

    (b) la teneur en polystyrène est comprise entre 25% et 35% en poids de la composition de copolymère séquencé; et

    (c) la masse moléculaire de la composition de copolymère séquencé est comprise entre 100 000 et 145 000.

**2.**    Adhésif thermofusible comprenant la composition de copolymère séquencé selon la revendication 1 et une résine collante.

**Revendications pour l'Etat contractant suivant : ES**

**1.**    Procédé pour la préparation d'une composition de copolymère séquencé styrène-isoprène-styrène linéaire de façon prédominante constituée de séquences polymères linéaires destinée à une utilisation dans des adhésifs thermofusibles à température d'application et à viscosité faibles, ladite composition de copolymère séquencé étant caractérisée en ce que

    (a) la masse moléculaire de la séquence polystyrène est comprise entre 14 000 et 16 000;

    (b) la teneur en polystyrène est comprise entre 25% et 35% en poids de la composition de copolymère séquencé; et

    (c) la masse moléculaire de la composition de copolymère séquencé est comprise entre 100 000 et 145 000.

**2.**    Procédé pour la préparation d'un adhésif thermofusible comprenant la composition de copolymère séquencé selon la revendication 1 et une résine collante.